# EUROPEAN PATENT APPLICATION

(11) **EP 2 124 383 A1**
(43) Date of publication of application: **25.11.2009**
(21) Application number: 08711319.7
(22) Date of filing: 15.02.2008
(51) Int. Cl.: H04L 9/32, G06F 21/20, G06F 21/24, G06K 17/00, G06K 19/07, G06K 19/073, H04L 9/10

(54) **IC TAG SYSTEM**

(30) Priority: 16.02.2007 JP 2007036242
(71) Applicant: Hitachi Ltd., Chiyoda-ku Tokyo 100-8280 (JP)
(72) Inventor: KOBAYASHI, Yuichi, Kawasaki-shi Kanagawa 215-0013 (JP); HONZAWA, Atsushi, Tokyo 140-8572 (JP); KUWANA, Toshiyuki, Tokyo 140-8572 (JP); FUKUSHIMA, Shinichirou, Yokohama-shi Kanagawa 244-0617 (JP)
(74) Representative: Calderbank, Thomas Roger
(86) International application number: PCT/JP2008/052489
(87) International publication number: WO 2008/099909

(57) **Abstract**

An IC tag system is provided which can perform transfer of a method of accessing an IC tag and assure data validity of the IC tag only between authorized users. The IC tag system comprises a data write-in device including a password encryption unit (130), a signature generation unit (140) and a data write-in unit (150) operative to communicate with the IC tag (30) to write in data and an encrypted password in the IC tag (30) and set the limitation on access to the data written in the IC tag (30) by the aid of the password, and a data read-in device including a password decryption unit (230), a signature authentication unit (240) and a data read-in unit (250) operative to communicate with the IC tag (30) to read in the data and the encrypted password from the IC tag (30) and release the limitation on access to the data by the aid of the decrypted password.

## Description

### INCORPORATION BY REFERENCE

The present application claims the priority of Japanese patent application No. 2007-036242 filed on February 16, 2007 and excerpts its contents by incorporation with reference to it.

### TECHNICAL FIELD

The present invention relates to an IC tag system having an IC tag and an apparatus for reading in/writing in data from/in the IC tag and more particularly, to a technique for assuring security of data to be stored in the IC tag.

### BACKGROUND ART

In recent years, an advancement has been made in the introduction of an IC tag system in which an IC tag having a memory stored with goods information and the like is affixed to a goods and the information is read out of the IC tag by using a data read-in device to perform management of a goods and confirmation of the location of the goods.

For example, when enterprise secret information or consumer privacy information is stored in the memory of the IC tag, there will occur a danger that the third party reads and leaks the information without authorization by means of the data read-in device or tampers with the information illegally by means of the data write-in device.

To cope with this problem, the password authentication function the IC tag has to decide whether or not a reader/writer is authorized is disclosed in Patent Documents 1 and 2.
Patent Document 1: JP-A-9-160491
Patent Document: JP-A-2002-269529

But there arises a problem that when a password set in the IC tag for the password authentication function is shared by business circles, an event of password leakage has influence upon all of the IC tags.

If different passwords are set for individual IC tags, the authorized reader/writer must know the correspondence relation between an IC tag and it's password. When letting a plurality of authorized readers/writers share the correspondence relation and make synchronization with it, difficulties increase more and more as the number of the IC tags increases.

### DISCLOSURE OF THE INVENTION

Then, it is an object of this invention to provide an IC tag system which can perform transfer of a method of accessing an IC tag and can assure the validity of data of the IC tag only between authorized users.

The above and other objects and novel features of the present invention will become apparent from the description in the present specification and the accompanying drawings.

Of inventions disclosed in the present application, a typical one will be outlined below in brief.

An IC tag system according to the present invention comprises an IC tag, a data write-in device for writing in data in the IC tag and a data read-in device for reading in data from the IC tag, the data write-in device including a password encryption unit for encrypting a password for getting access to the IC tag, a signature generation unit for generating a signature of data to be written in the IC tag and a data write-in unit operative to communicate with the IC tag so as to write in data and an encrypted password in the IC tag and to set the limitation on access to the data written in the IC tag by the aid of the password, the data read-in device including a password decryption unit for decrypting the encrypted password written in the IC tag, a signature authentication unit for authenticating the signature of the data written in the IC tag and a data read-in unit operative to communicate with the IC tag so as to read in the data and encrypted password from the IC tag and release the limitation on access to the data by the aid of the decrypted password, and the IC tag including a password authentication unit for limiting an access request transmitted from the data write-in device or data read-in device on the basis of the password, a primary data storage unit for storing the encrypted password and a secondary data storage unit for storing the data.

Meritorious effects attained by the typical one of the inventions disclosed in the present application will be described below in brief.

According to the present invention, even when different passwords are set for individual IC tags, by making authorized readers/writers share information of a key to interpreting a method of getting access to an IC tag, access to the IC tag can be accomplished without managing the correspondence relation between the IC tag and the password.

Also, according to the present invention, by granting the IC tag a signature, the validity of data of the IC tag can be maintained.

Other objects, features and advantages of the present invention will become apparent from the description of embodiments of the invention given hereinafter in conjunction with the accompanying drawings.

### BEST MODE FOR CARRYING OUT THE INVENTION

Embodiments of this invention will now be described in greater detail with reference to the drawings. In all of the drawings for explaining the embodiments, like members are designated in principle by like reference numerals and their reiterative descriptions will be omitted.

### (Embodiment 1)

In embodiment 1, transfer of a method of accessing an IC tag and assurance of the validity of IC tag data are practiced by using a common key encryption scheme in the IC tag system.

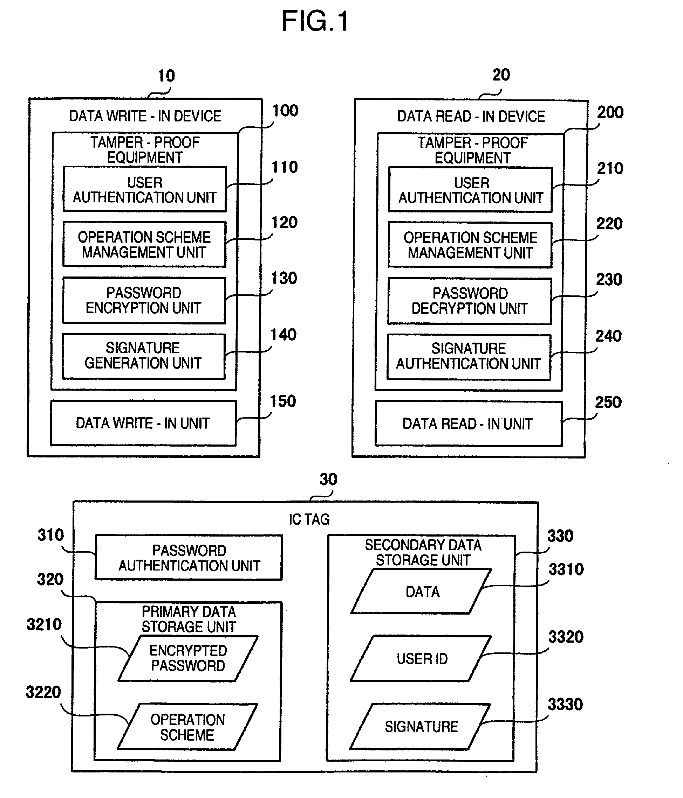

Construction of the IC tag system according to embodiment 1 of the invention will be described with reference to Fig. 1. Fig. 1 is a functional block diagram showing the construction of the IC tag system according to embodiment 1 of the invention.

In Fig. 1, the IC tag system comprises an IC tag 30 adapted to store data and operative to communicate by radio, a data write-in device 10 for communicating with the IC tag 30 by radio to write in data in the IC tag 30 and a date read-in device 20 for communicating with the IC tag 30 to read in data from the IC tag 30. For example, a RF-ID (Radio Frequency-Identification) tag can be used as the IC tag 30.

The data write-in device 10 and data read-in device 20 may either be exclusive devices dedicated to processes of writing and reading data in and from the IC tag 30 such as the RF-ID or be formed together with a personal computer, a cell phone, a kiosk terminal unit or an automatic vendor. Alternatively, the data write-in device 10 and data read-in device 20 may functionally be merged so as to be formed as a single device.

Then, the IC tag 30 may be affixed directly to a goods such as a book, clothes or an electric appliance or may be affixed to a wrapper or a box for packaging a goods. The IC tag 30 may otherwise be affixed to a card carried by an individual. To add, a plurality of IC tags 30, a plurality of data write-in devices 10 and a plurality of data read-in devices 20 may be provided.

The data write-in device 10 includes a user authentication unit 110 for authenticating by the aid of a PIN or apparatus ID that an authorized user utilizes the data write-in device 10 in a legal situation, an operation scheme management unit 120 for designating a password encryption method and a signature generation method by the aid of a key ID, a password encryption unit 130 for encrypting a password under the command of the operation scheme management unit 120, a signature generation unit 140 for generating a signature of data to be written in the IC tag 30 under the command of the operation scheme management unit 120, and a data write-in unit 150 operative to communicate with the IC tag 30 to write in data in the IC tag or lock the same. These functional blocks handle an electronic key and therefore, they may preferably be incorporated in a tamper-proof equipment 100 having tamper-proof nature for physically and theoretically defending the internal analysis of an IC card and preventing its falsification.

The data read-in device 20 includes a user authentication unit 210 for authenticating by the aid of the PIN or apparatus ID that an authorized user utilizes the data read-in device 20 in a legal situation, an operation scheme management unit 220 for designating by the aid of a key ID a password decryption method and a signature authentication method, a password decryption unit 230 for decrypting the password under the command of the operation scheme management unit 220, a signature authentication unit 240 for authenticating a signature of the data written in the IC tag 30 under the command of the operation scheme management unit 220 and a data read-in unit 250 operative to communicate with the IC tag 30 so as to read in data from the IC tag 30 and release locking. These functional blocks handle an electronic key and therefore, they may preferably be incorporated in a tamper-proof equipment 200 having tamper-proof nature such as an IC card.

The IC tag 30 includes a password authentication unit 310 for checking the password sent from the data write-in device 10 or data read-in device 20 in order to authenticate the user, a primary data storage unit 320 for storing information such as an encrypted password 3210 resulting from encryption of the password and an operation scheme 3220 such as key ID and a secondary data storage unit 330 for storing information such as a user ID 3320 of the user who has written data 3310 in the IC tag 30 and a signature 3330 of data 3310 to be written.

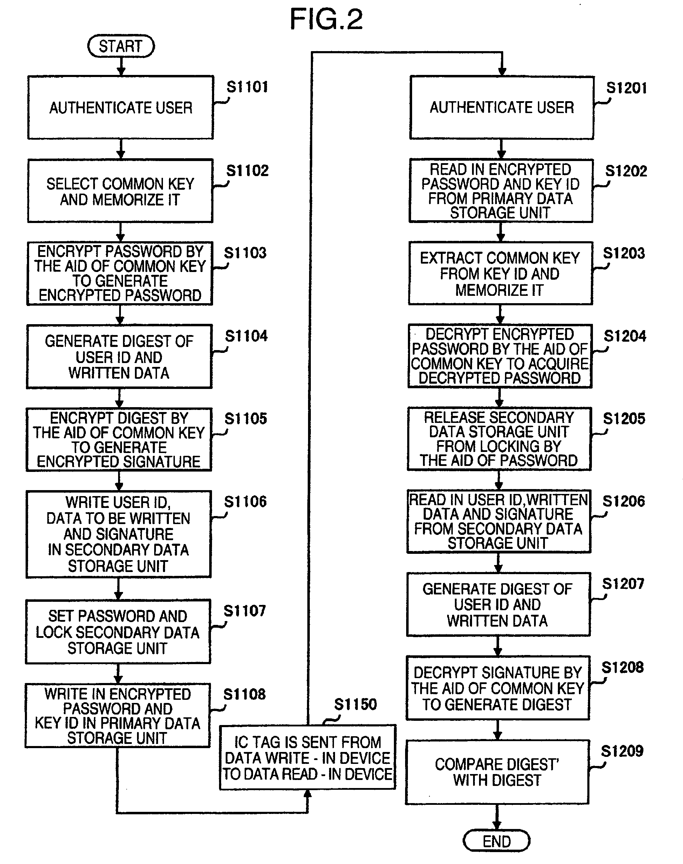

Next, by making reference to Fig. 2, operation of the IC tag system according to embodiment 1 of the invention will be described. Fig. 2 is a flowchart indicative of operation of the IC tag system according to embodiment 1 of the invention, showing a process which is carried out to perform transfer of a method of accessing the IC tag 30 and to assure data validity in the IC tag 30 by using a common key encryption scheme among the data write-in device 10, the data read-in device 20 and the IC tag 30.

In the tamper-proof equipment 100 constituting the data write-in device 10, a unique ID for discriminating the tamper-proof equipment 100, ID and password of the user utilizing the data write-in device 10 and an ID of the data write-in device 10 communicating with the tamper-proof equipment 100 and IC tag 30 are held in advance in a storage not shown.

Similarly, in the tamper-proof equipment 200 constituting the data read-in device 20, a unique ID for discriminating the tamper-proof equipment 200, ID and password of the user utilizing the data read-in device 20 and an ID of the data read-in device 20 communicating with the tamper-proof equipment 200 and IC tag 30 are also held in advance in a storage not shown.

Also held in each of the tamper-proof equipment 100 constituting the data write-in device 10 and the tamper-proof equipment 200 constituting the data read-in device 20 are two or more sets of a common key shared by the two and a key ID related as an operation scheme to the common key. In having the information in common as above, the information may be shared by annexing thereto a signature issued by an authentication office representing a reliable third party. For example, this signature may be sent to the two from a sever worked by the authentication office through a network or may be shared (downloaded) through a medium.

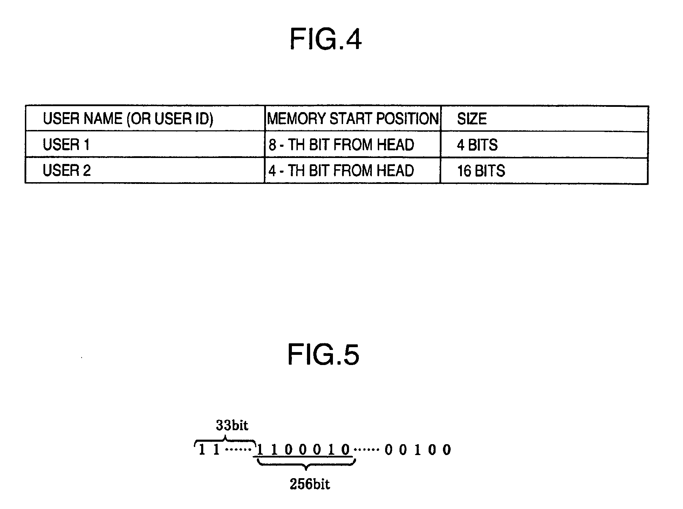

In each of the tamper-proof equipment 100 constituting the data write-in device 10 and the tamper-proof equipment 200 constituting the data read-in device 20, setting the limitation on the memory start position and size of the IC tag 30 subject to data write-in and data read-in in respect of individual users utilizing the data write-in device 10 and data read-in device 20 may be held as shown in Fig. 4, for example.

Assumptively, in the present embodiment, setting is held for permitting the users utilizing the data write-in device 10 and data read-in device 20 to write in and read in data over the whole range of bits in connection with the primary data storage unit 320 of IC tag 30 but within only a range of 256 bits starting from a 33rd bit of memory start position, as exemplified in Fig. 5, in connection with the secondary data storage unit 330 of IC tag 30.

The above information has been described as being held in the tamper-proof equipment 100 constituting the data write-in device 10 and in the tamper-proof equipment 200 constituting the data read-in device 20 but it may be held in, for example, a center server for monitoring the data write-in device 10 and data read-in device 20. In this process, access to the center server can be gotten process by process, for example, to control read-in of information necessary for each process.

Firstly, the user utilizing the data write-in device 10 inputs user ID and password to the data write-in device 10. At that time, the user authentication unit 110 of data write-in device 10 reads in the ID's set in the tamper-proof equipment 100 and in data write-in device 10 communicating with the IC tag 30 and compares them with information held in advance to confirm equality of all values (S1101).

With equality of all values determined, the program proceeds continuously to the next step. If even only one value differs, the process ends in this phase. Further, like the process of information as above, the unique ID of the tamper-proof equipment 100 may be sent to the center server which may in turn authenticate the IC card.

Next, the operation scheme management unit 120 of data write-in device 10 selects only one from a plurality of common keys and memorizes it. At the same time, a key ID paired with the selected common key is also memorized (S1102).

Next, the password encryption unit 130 of data write-in device 10 encrypts the password of IC tag 30 by using the common key memorized in S1102, generating an encrypted password (S1103). Alternatively, by using the common key memorized in S1102, the password encryption unit 130 of data write-in device 10 may encrypt a unique ID of IC tag 30, thus generating the password.

Next, the signature generation unit 140 of data write-in device 10 combines data to be written in the IC tag 30 with the user ID and calculates Hash values by using a Hash function, thus generating a digest of data to be written in the IC tag 30 and the user ID (S1104).

Next, the signature generation unit 140 of data write-in device 10 encrypts the digest by using the common key, thus generating a signature (S1105).

Next, the data write-in unit 150 of data write-in device 10 writes in the data 3310 to be written in the IC tag 30, the user ID 3320 and the signature 3330 in the secondary data storage unit 330 (S1106). At that time, in accordance with setting the limitation on the memory start position and size of the IC tag 30 subject to data write-in, the data is written within the range of 256bits starting from the 33rd bit.

Next, the data write-in unit 150 of data write-in device 10 sets the password in the IC tag 30 and locks the secondary data storage unit 330 (S1107). The locking may be of any one of inhibiting data write-in only, inhibiting data read-in only and inhibiting both data write-in and data read-in.

Next, the data write-in unit 150 of data write-in device 10 writes, as the operation scheme 3220, the encrypted password 3210 and the key ID in the primary data storage unit 320 of IC tag 30 (S1108).
The process in the data write-in device 10 now ends.

The IC tag 30 applied with the aforementioned process is sent from the data write-in device 10 to the data read-in device 20 (S1150).

Next, the user utilizing the data read-in device 20 inputs user ID and password to the data read-in device 20. At that time, the user authentication unit 210 of data read-in device 20 reads in the ID's set in the tamper-proof equipment 200 and in data read-in device 20 communicating with the IC tag 30 and compares them with information held in advance to confirm equality of all values (S1201). With equality of all values determined, the program proceeds continuously to the next step. If even only one value differs, the process ends in this phase. Further, the unique ID of the tamper-proof equipment 200 may be sent to the center server which may in turn authenticate the IC card.

Next, the data read-in unit 250 of data read-in device 20 reads in the encrypted password 3210 and the key ID representing the operation scheme 3220 from the primary data storage unit 320 of IC tag 30 (S1202).

Next, the operation scheme management unit 220 of data read-in device 20 extracts a common key paired with the key ID from a plurality of common keys and memorizes it (S1203).

Next, the password decryption unit 230 of data read-in device 20 decrypts the encrypted password by using the common key extracted in S1203, acquiring the password of the IC tag 30 (S1204). Alternatively, in case the password encryption unit 130 of data write-in device 10 has encrypted the unique ID of IC tag 30 in step S1103 to generate a password, the password decryption unit 230 of data read-in device 20 may decrypt the unique ID of IC tag 30 by using the common key extracted in S1203, thus acquiring the password.

Next, the data read-in unit 250 of data read-in device 20 releases the lock applied to the secondary data storage unit 330 of IC tag 30 by the aid of the password acquired in S1204 (S1205).

Next, the data read-in unit 250 of data read-in device 20 reads in the data 3310, user ID 3320 and signature 3330 which have been written in the IC tag 30 from the secondary data storage unit 330 of IC tag 30 (S1206). At that time, in accordance with setting the limitation on the memory start position and size of the IC tag 30 subject to data read-in, the data is read in within the range of 256bits starting from the 33rd bit.

Next, the signature authentication unit 240 of data read-in device 20 combines the signature read in from the IC tag 30 with the user ID and calculates Hash values by using a Hash function, thus generating a digest of data read in from the IC tag 30 and the user ID (S1207).

Next, the signature authentication unit 240 of data read-in device 20 decrypts the signature read in from the IC tag 30 by using the common key, thus acquiring a digest' (S1208).

Finally, the signature authentication unit 240 of data read-in device 20 compares the digest generated in S1207 with the digest' acquired in S1208 to authenticate that the data written in the IC tag 30 is not tampered with (S1209).

By sharing the common key in advance among authorized users in this manner, only the authorized user can store data in the IC tag 30 by using the data write-in device 10 and inhibit read-in/write-in and only the authorized user can release the read-in/write-in of the IC tag 30 from inhibition by using the data read-in device 20 and can read in data, thus confirming the validity of the data.

Further, by limiting independently in advance the areas in the IC tag 30 which are to be subjected to write-in and read-in by the user authentication units 110 and 210, the memory area can be divided among the plural authorized users and the thus divided memory areas can be managed individually. Through this, information stored in the IC tag, such as goods manufacture date, guarantee period and sold state, can be prevented from being tampered with or erroneously written in. At the same time, the consumer privacy violation attributable to illegal read-in of data from the IC tag can be prevented.

### (Embodiment 2)

In embodiment 2, transfer of a method of accessing an IC tag and assurance of validity of IC tag data in embodiment 1 are practiced by using a public key encryption scheme and the construction of the IC tag system of the present embodiment is similar to that of embodiment 1.

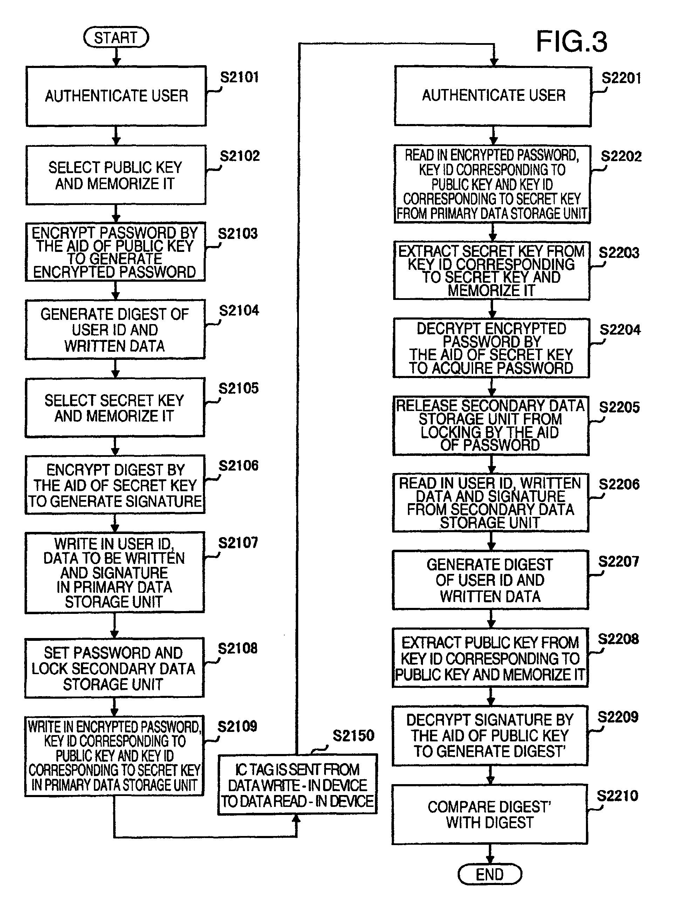

Next, by making reference to Fig. 3, operation of the IC tag system according to embodiment 2 of the invention will be described. Fig. 3 is a flowchart indicative of operation of the IC tag system according to embodiment 2 of the invention, showing a process carried out to perform transfer of a method for access to the IC tag and assure data validity by using a public key encryption scheme among the data write-in device 10, data read-in device 20 and IC tag 30.

In the tamper-proof equipment 100 constituting the data write-in device 10, a unique ID for discriminating the tamper-proof equipment 100, ID and password of the user utilizing the data write-in device 10 and an ID of the data write-in device 10 communicating with the tamper-proof equipment 100 and IC tag 30 are held in advance.

Also held in the tamper-proof equipment 100 constituting the data write-in device 10 are two or more sets of a secret key of the user utilizing the data write-in device 10, a public key and a write-in user key ID related as the operation scheme to the secret key and public key. The public key may be laid open by annexing thereto a signature issued by an authentication office representing a reliable third party.

Also held in the tamper-proof equipment 100 constituting the data write-in device 10 are two or more sets of a public key issued by the user utilizing the data read-in device 20 and a read-in user key ID related as the operation scheme to the public key.

Similarly, in the tamper-proof equipment 200 constituting the data read-in device 20, a unique ID for discriminating the tamper-proof equipment 200, ID and password of the user utilizing the data read-in device 20 and an ID of the data read-in device 20 communicating with the tamper-proof equipment 200 and IC tag 30 are held in advance.

Also held in the tamper-proof equipment 200 constituting the data read-in device 20 are two or more sets of a secret key of the user utilizing the data read-in device 20, a public key and a read-in user key ID related as the operation scheme to the secret key and public key. The public key may be laid open by annexing thereto a signature issued by the authentication office representing a reliable third party.

Also held in the tamper-proof equipment 200 constituting the data read-in device 20 are two or more sets of a public key issued by the user utilizing the data write-in device 10 and a write-in user key ID related as the operation scheme to the public key.

In each of the tamper-proof equipment 100 constituting the data write-in device 10 and the tamper-proof equipment 200 constituting the data read-in device 20, setting the limitation on, for example, the memory start position and size of the IC tag 30 subject to data write-in and data read-in in respect of individual users utilizing the data write-in device 10 and data read-in device 20 may be held.

Assumptively, in the present embodiment, setting is held for permitting the users utilizing the data write-in device 10 and data read-in device 20 to write in and read in data over the whole range of bits in connection with the primary data storage unit 320 of IC tag 30 but within only a range of 256 bits starting from a 33rd bit of memory start position in connection with the secondary data storage unit 330 of IC tag 30.

The above information has been described as being held in the tamper-proof equipment 100 constituting the data write-in device 10 and in the tamper-proof equipment 200 constituting the data read-in device 20 but it may be held in the center server for monitoring the data write-in device 10 and data read-in device 20.

Firstly, the user utilizing the data write-in device 10 inputs user ID and password to the data write-in device 10. At that time, the user authentication unit 110 of data write-in device 10 reads in the ID's set in the tamper-proof equipment 100 and in data write-in device 10 communicating with the IC tag 30 and compares them with information held in advance to confirm equality of all values (S2101).
With equality of all values determined, the program proceeds continuously to the next step. If even only one value differs, the process ends in this phase. Further, a unique ID of the tamper-proof equipment 100 may be sent to the center server which may in turn authenticate the IC card.

Next, the operation scheme management unit 120 of data write-in device 10 selects only one from a plurality of public keys the user utilizing the data read-in device 20 issues and memorizes it. At the same time, a read-in user key ID paired with the selected public key is also memorized (S2102).

Next, the password encryption unit 130 of data write-in device 10 encrypts the password of IC tag 30 by using the public key memorized in S2102, generating an encrypted password (S2103)

Next, the signature generation unit 140 of data write-in device 10 combines data to be written in the IC tag 30 with the user ID and calculates Hash values by using a Hash function, thus generating a digest of data to be written in the IC tag 30 and the user ID (S2104).

Next, the signature generation unit 140 of data write-in device 10 selects only one from secret keys of the user utilizing the data write-in device 10 and memorizes it. At the same time, the write-in user key ID paired with the selected secret key is also memorized (S2105).

Next, the signature generation unit 140 of data write-in device 10 encrypts the digest by using the secret key, thus generating a signature (S2106).

Next, the data write-in unit 150 of data write-in device 10 writes in the data 3310 to be written in the IC tag 30, the user ID 3320 and the signature 3330 in the secondary data storage unit 330 (S2107). At that time, following setting the limitation on the memory start position and size of the IC tag 30 subject to data write-in, the data is written within the range of 256bits starting from the 33rd bit.

Next, the data write-in unit 150 of data write-in device 10 sets the password in the IC tag 30 and locks the secondary data storage unit 330 (S2108). The locking may be of any one of inhibiting data write-in only, inhibiting data read-in only and inhibiting both write-in and read-in.

Next, the data write-in unit 150 of data write-in device 10 writes in the encrypted password 3210 and, as the operation scheme 3220, the write-in user key ID related to the secret key of the user utilizing the data write-in device 10 and the read-in user key ID related to the public key the user utilizing the data read-in device 20 issues, in the primary data storage unit 320 of IC tag 30 (S2109).
The process in the data write-in device 10 now ends.

The IC tag 30 applied with the aforementioned process is sent from the data write-in device 10 to the data read-in device 20 (S2150).

Next, the user utilizing the data read-in device 20 inputs user ID and password to the data read-in device 20. At that time, the user authentication unit 210 of data read-in device 20 reads in the ID's set in the tamper-proof equipment 200 and in data read-in device 20 communicating with the IC tag 30 and compares them with information held in advance to confirm equality of all values (S2201). With equality of all values determined, the program proceeds continuously to the next step. If even only one value differs, the process ends in this phase. Further, a unique ID of the tamper-proof equipment 200 may be sent to the center server which may in turn authenticate the IC card.

Next, the data read-in unit 250 of data read-in device 20 reads in the encrypted password 3210 and, as the operation scheme 3220, the read-in user key ID related to the secret key of the user utilizing the data read-in device 20 and the write-in user key ID related to the public key the user utilizing the data write-in device 10 issues, from the primary data storage unit 320 of IC tag 30 (S2202).

Next, the operation scheme management unit 220 of data read-in device 20 extracts a secret key paired with the read-in user key ID from secret keys of the user utilizing the data read-in device 20 and memorizes it (S2203).

Next, the password decryption unit 230 of data read-in device 20 decrypts the encrypted password by using the secret key extracted in S2203, acquiring the password of the IC tag 30 (S2204).

Next, the data read-in unit 250 of data read-in device 20 releases the lock applied to the secondary data storage unit 330 of IC tag 30 (S2205).

Next, the data read-in unit 250 of data read-in device 20 reads the data 3310, user ID 3320 and signature 3330 which have been written in the IC tag 30, from the secondary data storage unit 330 of IC tag 30 (S2206). At that time, following setting the limitation on the memory start position and size of the IC tag 30 subject to data read-in, the data is read in within the range of 256 bits starting from the 33rd bit.

Next, the signature authentication unit 240 of data read-in device 20 combines the data read in from the IC tag 30 with the user ID and calculates Hash values by using a Hash function, thus generating a digest of data read in from the IC tag 30 and the user ID (S2207).

Next, the signature authentication unit 240 of data read-in device 20 extracts a public key paired with the read-in user key ID from public keys of the user utilizing the data read-in device 20 and memorizes it (S2208).

Next, the signature authentication unit 240 of data read-in device 20 decrypts the signature read in from the IC tag 30 by using the public key, thus acquiring a digest' (S2209).

Finally, the signature authentication unit 240 of data read-in device 20 compares the digest generated in S2207 with the digest' acquired in S2209 to authenticate that the data written in the IC tag 30 is not tampered with (S2210).

By exchanging the public key in advance among authorized users in this manner, only the authorized user can store data in the IC tag 30 by using the data write-in device and inhibit read-in/write-in and only the authorized user can release the inhibition state of read-in/write-in of the IC tag 30 by using the data read-in device and can read in data, thus confirming the validity of the data.

While the invention made by the present inventors has specifically been set forth so far on the basis of the embodiments, the present invention is in no way limited to the foregoing embodiments and can obviously be changed or altered in various ways without departing from the gist of the invention.

### INDUSTRIAL APPLICABILITY

The present invention relates to an IC tag system having an IC tag and an apparatus for reading and writing data from and in the IC tag and can be applicable widely to a system which needs to assure security of data to be stored in the IC tag.

### BREIF DESCRIPTION OF THE DRAWINGS

[Fig. 1] is a functional block diagram showing the construction of an IC tag system according to embodiment 1 of the present invention.
[Fig. 2] is a flowchart showing operation of the IC tag system according to embodiment 1 of the invention. [Fig. 3] is a flowchart showing operation of an IC tag system according to embodiment 2 of the invention.
[Fig. 4] is a diagram showing an example of structure of memory start position and size used in embodiments 1 and 2 of the invention.
[Fig. 5] is a diagram showing the memory structure used in embodiments 1 and 2 of the invention.

## Claims

1. An IC tag system comprising an IC tag, a data write-in device for writing in data in said IC tag and a data read-in device for reading in the data from said IC tag,
said data write-in device including a password encryption unit for encrypting a password for getting access to said IC tag and a data write-in unit operative to communicate with said IC tag to write in said data and said encrypted password in said IC tag and for setting the limitation on access to said data written in said IC tag by the aid of said password;
said data read-in device including a password decryption unit for decrypting said encrypted password written in said IC tag and a data read-in unit operative to communicate with said IC tag to read in said data and said encrypted password from said IC tag and for releasing the limitation on access to said data by the aid of said decrypted password; and
said IC tag including a password authentication unit for limiting, on the basis of said password, an access request sent from said data write-in device or said data read-in device, a primary data storage unit for storing said encrypted password and a secondary data storage unit for storing said data.

2. An IC tag system according to claim 1, wherein
said data write-in device includes a signature generation unit for generating a signature of data to be written in said IC tag, and
said data read-in device includes a signature authentication unit for authenticating said signature of said data written in said IC tag.

3. An IC tag system according to claim 2, wherein
each of said data write-in device and said data read-in device holds in advance a common key shared by authorized users of said data write-in device and said data read-in device;
said password encryption unit of data write-in device encrypts said password by the aid of said common key;
said signature generation unit of data write-in device generates a signature of data to be written in said IC tag by the aid of said common key;
said password decryption unit of data read-in device decrypts the encrypted password by the aid of said common key; and
said signature authentication unit of data read-in device authenticates said signature of said data written in said IC tag by the aid of said common key.

4. An IC tag system according to claim 2, wherein
each of said data write-in device and said data read-in device holds in advance a public key exchanged among authorized users of said data write-in device and data read-in device;
said password encryption unit of data write-in device encrypts said password by the aid of said public key of the user of said data write-in device;
said signature generation unit of data write-in device generates a signature of data to be written in said IC tag by the aid of a secret key corresponding to said public key of the user of said data write-in device;
said password decryption unit of data read-in device decrypts said encrypted password by the aid of a secret key corresponding to said public key of the user of said data read-in device; and
said signature authentication unit of data read-in device authenticates said signature of said data written in said IC tag by the aid of said public key of the user of said data write-in device.

5. An IC tag system according to claim 2, wherein
said data write-in device holds two or more information about a method for encryption of said password in said password encryption unit and information about a method for generation of said signature in said signature generation unit and designates the information about said password encryption method and the information about said signature generation method by using a key ID; and
said data read-in device holds two or more information about a method for decryption of said password in said password decryption unit and information about a method for authentication of said signature in said signature authentication unit and specifies the information about said password decryption method and the information about said signature authentication method on the basis of said key ID.

6. An IC tag system according to claim 2, wherein
said password encryption unit and signature generation unit of said data write-in device and said password decryption unit and signature authentication unit of said data read-in device are packaged in tamper-proof equipments of tamper-proof nature, respectively.
